# EUROPÄISCHE PATENTSCHRIFT

(11) **EP 1 112 114 B1**
(45) Veröffentlichungstag und Bekanntmachung des Hinweises auf die Patenterteilung: **28.05.2003**
(21) Anmeldenummer: 99938248.4
(22) Anmeldetag: 15.07.1999
(51) Int. Cl.: B01D 29/41, B01D 25/26

(54) **FILTERMODUL**
FILTER MODULE
MODULE FILTRANT

(30) Priorität: 17.08.1998 DE 19836949
(43) Veröffentlichungstag der Anmeldung: 04.07.2001
(73) Patentinhaber: SEITZSCHENK FILTERSYSTEMS GmbH, 55543 Bad Kreuznach (DE)
(72) Erfinder: STROHM, Gerhard, D-55278 Dexheim (DE); SCHNIEDER, Georg, D-55545 Bad Kreuznach (DE)
(74) Vertreter: Fuchs Mehler Weiss & Fritzsche
(86) Internationale Anmeldenummer: EP9904997
(87) Internationale Veröffentlichungsnummer: WO00010683

(56) Entgegenhaltungen:
- EP-A- 0 291 883
- EP-A- 0 451 947
- WO-A-98/35740
- DE-C- 944 065
- US-A- 3 294 241

## Beschreibung

Die Erfindung betrifft ein Filtermodul mit Sammler-/Verteilerschichten für das Filtrat oder das Unfiltrat, zwischen denen jeweils mindestens eine Filterschicht angeordnet ist, wobei die Filterschichten und die Sammler-/Verteiler-Schichten aus demselben Basismaterial gefertigt sind, unterschiedliche Durchlässigkeit und/oder Abscheidegrade aufweisen und spaltfrei aufeinandergestapelt sind, und wechselseitig zu einem Filtrat-/Unfiltratraum mittels Dichtelementen abgedichtet sind,

Ein solches Filtermodul ist aus der DE-C-944.065 bekannt.

Filtermodule sind in vielfältigen Bauformen bekannt, wobei der Mehrheit dieser Filtermodule gemeinsam ist, daß die Filterschichten aus ebenen Materialien, also Filterkartons, Papieren, Vliesen oder Geweben hergestellt sind. Dieser Aufbau des Filtermoduls hat den Vorteil, daß die Herstellung der Filterschichten relativ preisgünstig ist, weil diese auf kontinuierlich arbeitenden Maschinen erfolgen kann.

Schichtenfilter oder Filterschichten bestehen aus Tiefenfiltermaterial, das organische und/oder anorganische, faserige und/oder körnige Stoffe aufweist. Als Basismaterial für Filterschichten werden Zellulose oder Kunststoffasern verwendet, in die beispielsweise Kieselgur, Perlite oder Metalloxide oder andere filtrationsaktive Substanzen eingelagert werden können. Hierbei dienen Kieselgure und Perlite zur Vergrößerung der inneren Oberfläche und damit zur Vergrößerung des Trubaufnahmevermögens.

Der Einsatzbereich der Filterschichten reicht von der Klärung und Behandlung von Flüssigkeiten in der gesamten Getränkeindustrie bis in den Pharmabereich und die chemische Industrie. Filterschichten weisen nicht nur eine Siebwirkung auf, mit der grobe Teilchen auf der Oberfläche der Filterschicht zurückgehalten werden, sondern insbesondere auch eine Tiefenwirkung für feine Teilchen auf, die in den Hohlräumen innerhalb des Tiefenfiltermaterials zurückgehalten werden. Je nach Art der verwendeten Materialien können diese Filterschichten auch eine Adsorptionswirkung aufweisen und für bestimmte Anwendungszwecke kann die Oberfläche nachbehandelt sein, damit sich im trockenen und feuchten Zustand keine faserigen Teilchen ablösen können.

Im nassen Zustand sind die Filterschichten relativ weich und neigen zum Quellen. Dies wird beispielsweise in Horst Gasper, "Handbuch der industriellen Festflüssigfiltration", Hüthig-Verlag Heidelberg 1990, 5. 239 ff. beschrieben.

Üblicherweise werden diese Filterschichten in sogenannten Schichtenfiltergeräten bzw. Filterpressen durch Einklemmen zwischen Filterplatten oder Filterrahmen betrieben. Eine Übersicht über diesen Stand der Technik ist ebenfalls in Horst Gasper "Handbuch der industriellen Festflüssigfiltration" 5. 166 ff. zusammengestellt.

Danach werden die Filterschichten einzeln von Hand in horizontale oder vertikale Gestelle eingelegt. Rahmen aus Edelstahl oder Kunststoff sorgen für die Trennung der Filterschichten und bilden Räume zum Verteilen des Unfiltrats und zum Sammeln des Filtrates. Bedingt durch die weitgehende manuelle Tätigkeit beim Einlegen der Filterschichten in die Gestelle, beim Ausbau der Filterschichten aus den Gestellen und die anschließend notwendige Reinigung der Filterrahmen ist der Betrieb derartiger Filter mit hohen Personalkosten verbunden. Die Reinigung ist insbesondere dann aufwendig und unter Umständen auch für das Personal gefährlich, wenn aggressive Medien filtriert worden sind. Daneben sind die Investitionskosten für derartige Filtergeräte sehr hoch, da für jede vorgesehene Filterschicht ein speziell ausgebildete Filterplatte benötigt wird.

Weiterhin weisen diese Filter in der Regel durch ihre offene Bauart geringe aber meßbare Fluidverluste beim Betrieb auf, die an den Stirnseiten der Filterschichten aus diesen heraustreten. Die Vermeidung von Tropfverlusten ist nur durch spezielle aufwendige Maßnahmen mit einer Vielzahl von Dichtungen möglich. Eine Form der Abdichtung zur Umgebung wird in der DE 39 06 816 C3 beschrieben.

Aus der EP 0 465 424 B1 ist ein Tiefbettfilter bekannt, das zur Vergrößerung der Filtrationsfläche eine plissierte Filterschicht aufweist. Die Durchströmung der plissierten Filterschicht erfolgt senkrecht zur Oberfläche der Filterschicht.

Ein Filtermodul aus aufeinander gestapelten Schichtenfilterzellen ist der EP 0 291 883 A3 zu entnehmen. Zur Fertigung des beschriebenen Moduls werden zunächst Filtertaschen mit innenliegendem Drainagematerial hergestellt, die von einem Dichtungselement und einer Kunststoffmasse leckdicht umschlossen sind. Diese Taschen werden anschließend so aufeinandergestapelt, daß das Fluid zwischen die Zellen dringen kann. Auch bei diesem Filtermodul sind zusätzliche Bauteile für die beabstandete Anordnung der Filterschichten erforderlich. Die Strömung durch das Filtermodul erfolgt in der Ebene der Filterschichten, die dann allerdings senkrecht zur Schichtebene durchströmt werden müssen, um die Filtration zu bewirken. Diese Filterzellen sind ohne besondere Maßnahmen nicht rückspulbar.

Die WO 94/09880 beschreibt ein Filterelement für die Tiefenfiltration, das aus einem porösen, dickwandigen selbsttragenden rohrförmigen Filterelement mit einem Hohlkern besteht. Dieses rohrförmige Filterelement besteht im wesentlichen aus zwei Schalen, wobei die äußere Schale große Poren und die innere Schale feine Poren aufweist. Ein Vorteil wird darin gesehen, daß bei diesem Aufbau im Gegensatz zu feinporigen homogen aufgebauten Filtermodulen, sofern sie in der bisher bekannten Weise gefertigt werden, der Flüssigkeit keinen so hohen Widerstand entgegensetzen. Andererseits ist die Filtrationsfläche gering.

Nachteilig bei den bekannten Filtermodulen ist es, daß sie aufwendig zu entsorgen sind. Die Filtermodule setzen sich aus einer Vielzahl von unterschiedlichen Bauteilen zusammen, die nach Gebrauch nur sehr schwer sortenrein getrennt werden können.

Ausgehend von der DE-C-944.065 liegt der Erfindung die Aufgabe zugrunde, ein Filtermodul so zu gestalten, daß es möglichst einfach aufgebaut ist, sowie nach Gebrauch die Entsorgung erleichtert.

Dieses Problem wird erfindungsgemäß dadurch gelöst, daß die Dichtelemente aus derjenigen Filterschicht mit dem höchsten Abscheidegrad oder aus mit Harz getränkter Filterschicht gefertigt sind oder Formteile sind, die Mittel zum gegenseitigen Verbinden aufweisen.

Gemäß einer ersten Variante können die Dichtelemente aus demjenigen Filterschichtmaterial mit dem höchsten Abscheidegrad gefertigt sein. Beispielsweise können die Dichtelemente aus Entkeimungsschichtmaterial bestehen. Unfiltrat, das durch diese Dichtelemente hindurchdringt, würde somit mit dem höchsten Abscheidegrad gefiltert werden.

Die Dichtelemente können gemäß einer weiteren Variante aus mit Harz getränkter Filterschicht gefertigt sein. In diesem Fall lassen sich die Dichtelemente auch nach einem Zusammenbau des Filtermoduls herstellen.

Die Herstellung von Dichtelementen aus demselben Basismaterial wie die Filterschichten und die Sammler-/Verteiler-Schichten erleichtert das Entsorgen des gesamten Moduls.

Es besteht gemäß einer dritten Variante auch die Möglichkeit, die Dichtelemente aus Formteilen, wie z.B. Kunststoffrahmen, herzustellen, die Mittel zum gegenseitigen Verbinden aufweisen. Die Formteile können zusammen mit den Schichten zur Bildung des Moduls eingelegt werden. Wenn die Sammler/Verteiler-Schichten und die Filterschichten ebenfalls Kunststoff als Basismaterial aufweisen, wird auch in diesen Fall die Entsorgung erleichtert. Die Kombination der Kunststoffformteile mit Sammler-/Verteiler-Schichten und Filterschichten aus anderen Basismaterialien ist möglich.

Um die Stabilität insbesondere großer Filtermodule mit einer Vielzahl von Filterschichten als Sammler-/Verteiler-Schichten zu gewährleisten, ist es von Vorteil, wenn die Formteile diese zusätzlichen Mittel zum gegenseitigen Verbinden aufweisen. Solche Verbindungsmittel können beispielsweise Clipse sein, die beim Aufeinanderstapeln der Schichten bzw. der Formteile ineinanderrasten. Diese Verbindungsmittel können auch leicht lösbar ausgebildet sein, damit die Modulbauteile leicht voneinander getrennt werden können.

Durch die Verwendung desselben Basismaterials für die Filterschichten und die Sammler-/Verteilerschichten liegen die Filterschichten des erfindungsgemäßen Filtermoduls nach Gebrauch insofern sortenrein vor, als daß eine aufwendige manuelle Trennung wie bei den bekannten Filtermodulen nicht erforderlich ist. Hierdurch läßt sich das erfindungsgemäße Filtermodul besonders einfach recyceln.

Das erfindungsgemäße Filtermodul läßt sich nahezu beliebig gestalten. So kann die Außenkontur der Filterschichten beliebig gewählt werden, wobei runde oder viereckige Formen bevorzugt sind. Die Anzahl der aufeinander gestapelten Filterschichten und Sammler-/Verteilerschichten ist ebenfalls frei wählbar. Es können Filterschichten, die unterschiedliche Aufgaben lösen, miteinander kombiniert werden.

Vorzugsweise sind die Filterschichten und die Sammler-/Verteilerschichten planar.

Zusätzliche Einbauten im Filtermodul zum Lenken des Filtrats oder des Unfiltrats sind nicht erforderlich. Deshalb ist das erfindungsgemäße Filtermodul besonders einfach und kompakt aufgebaut und läßt sich somit auch kostengünstig fertigen.

Vorzugsweise sind mindestens zwei Filterschichten unterschiedlichen Abscheidegrades aufeinandergelegt, wodurch sich somit auf einfache Weise ein Stufenfilter herstellen läßt. Die letzte Filterschicht einer solchen Filterschichtanordnung kann beispielsweise als Entkeimungsschicht ausgebildet sein.

Es besteht auch die Möglichkeit, mindestens zwei Filterschichten mit demselben Abscheidegrad aufeinander zu legen. Dies ist insbesondere dann von Vorteil, wenn es sich um adsorptiv wirkende Filterschichten handelt, weil dann die Durchtrittsstrecke für das Unfiltrat in beliebiger Weise vergrößert werden kann, so daß die adsorptive Wirkung des Filtermaterials sich besser entfalten kann.

Gemäß einer weiteren Ausführungsform können in die Filterschichten unterschiedliche adsorptiv wirkende Materialien eingearbeitet sein. Dies bedeutet, daß die unterschiedlichen Materialien in unterschiedlichen Filterschichten vorhanden sein können bzw. daß diese unterschiedlichen Materialien auch in einer Filterschicht kombiniert sein können. Derartige Filterschichten können auch mit Filterschichten kombiniert sein, die von adsorptiv wirkenden Materialien frei sind.

Bezüglich der Sammler-/Verteiler-Schichten sind zwei Ausführungsformen bevorzugt.

Die erste Ausführungsform sieht vor, daß die Sammler-/Verteiler-Schichten aus offenen Filterschichten bestehen. Hierunter versteht man Filterschichten, die beispielsweise keine Kieselgur aufweisen und daher einen Abscheidegrad von nahezu Null besitzen.

Diese offenen Sammler-/Verteiler-Schichten sind jeweils zur Anströmung in ihren Randbereichen ausgebildet. Durch diese Gestaltung lassen sich die Filterschichten für einen vorgesehenen Anwendungsfall zusammenstellen und zu einer nahezu beliebigen Höhe stapeln.

Diese im Stand der Technik wegen ihrer Tropfneigung als nachteilig angesehen offenen Filterschichten können in der erfindungsgemäßen Anordnung der Filtermodule vorteilhaft eingesetzt werden.

Gemäß einer zweiten Ausführungsform können die Sammler-/Verteiler-Schichten in die vorgesehene Strömungsrichtung weisende Durchbrechungen aufweisen. Hierdurch können unabhängig vom verwendeten Material Schichten hergestellt werden, in denen keine Abscheidung stattfindet. Insofern können die Sammler-/Verteiler-Schichten gemäß dieser Ausführungsform vorzugsweise aus Entkeimungsschichten bestehen.

Vorteilhafterweise werden schlitzartige Durchbrechungen in den Sammler-/Verteilerschichten verwendet, wobei auch mehrere solcher Sammler-/Verteiler-Schichten aufeinander gestapelt werden können. Die Anordnung der Durchbrechungen ist in diesem Fall so gewählt, daß die Durchbrechungen miteinander kommunizieren.

Solche Sammler-/Verteiler-Schichten lassen sich beispielsweise im Stanzverfahren herstellen.

Die Abdichtung der Sammler-/Verteiler-Schichten zum Filtratraum bzw. Unfiltratraum erfolgt vorzugsweise durch geeignete Dichtelemente. Diese Dichtelemente, die für jede Schicht einzeln vorgesehen sein können, weisen vorzugsweise dieselbe Dicke auf wie die entsprechende Schicht.

Auch die Filterschichten weisen vorzugsweise zum Filtratkanal oder Filtratraum weisende Dichtelemente auf, wobei bei einer Anordnung von Filterschichten mit unterschiedlicher Durchlässigkeit und/oder Abscheidegrad die dichteste Schicht, d.h. die Schicht mit dem höchsten Abscheidegrad bzw. geringsten Durchlässigkeit nicht zwingend ein Dichtelement aufweisen muß.

Wenn mehrere Dichtelemente aufeinanderliegen, müssen sie leckdicht miteinander verbunden sein.

Die Dichtelemente des Filtermoduls lassen sich gemäß einer anderen vorteilhaften Weiterbildung der Erfindung besonders kostengünstig herstellen, wenn mehrere aneinandergrenzende Dichtelemente einteilig gestaltet sind. Dies trägt ebenfalls zur Erhöhung der Stabilität des Filtermoduls bei.

Die Filtermodule können in beiden Flußrichtungen betrieben werden, d.h. Filtratund Unfiltratraum können vertauscht werden. Darüber hinaus sind die Filtermodule rückspülbar.

Die Schichten bzw. das Modul können mehrere Filtrat-/Unfiltratkanäle aufweisen, die nicht mittig angeordnet sein müssen.

Beispielhafte Ausführungsformen der Erfindung werden nachfolgend anhand der Zeichnungen erläutert.
- Fig. 1: eine schematische Schnittdarstellung durch ein erfindungsgemäßes Filtermodul,
- Fig. 2, 3a, 4: weitere Ausführungsformen des erfindungsgemäßen Filtermoduls,
- Fig. 3b: eine vergrößerte Darstellung eines Ausschnitts des in Fig. 3a gezeigten Filtermoduls mit Dichtelementen gemäß einer weiteren Ausführungsform,
- Fig. 5: eine Draufsicht auf je eine Sammlerschicht und eine Verteilerschicht,
- Fig. 6: Durchbrüche übereinandergelegter Sammelschichten und Verteilerschichten aus Fig. 5,
- Fig. 7: eine Filtervorrichtung mit einem Filtermodul.

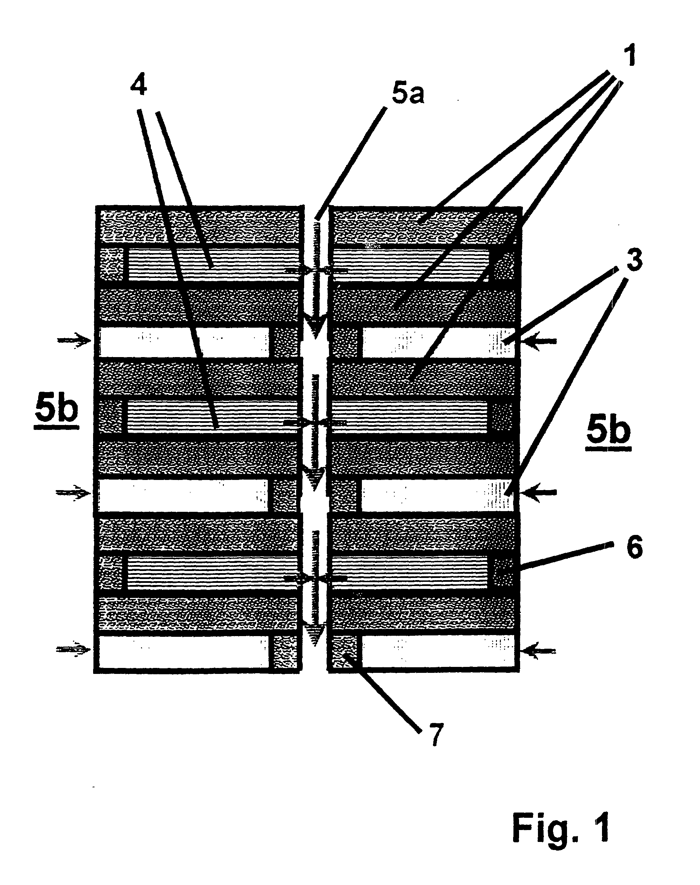

Die Fig. 1 zeigt eine schematische Schnittdarstellung durch eine besonders einfache Ausführungsform eines erfindungsgemäßen Filtermoduls. Das Filtermodul hat abwechselnd übereinanderliegende Filterschichten 1, Verteilerschichten 3 und Sammlerschichten 4 aus demselben Basismaterial und in einem mittleren Bereich einen Filtratkanal 5a zum Abführen von Filtrat. Der Außenraum des Filtermoduls bildet den Unfiltratraum 5b. Zur Vereinfachung der Zeichnung sind die Filterschichten 1, Verteilerschichten 3 und die Sammlerschichten 4 beabstandet dargestellt. Im vollständig montierten Filtermodul liegen die Schichten 1, 3, 4 unmittelbar aufeinander, so daß keine Flüssigkeit zwischen den Schichten 1, 3, 4 hindurchströmen kann.

Im radial äußeren Bereich befindet sich Unfiltrat, welches über die Verteilerschichten 3 in das Filtermodul eindringen kann. In den Verteilerschichten 3 wird die Strömungsrichtung des Unfiltrats umgelenkt und durch die Filterschichten 1 mit einem vorgesehenen Abscheidegrad geleitet. In den Filterschichten 1 wird das Unfiltrat gereinigt und gelangt anschließend als Filtrat in die Sammlerschichten 4. Die Sammlerschichten 4 haben eine Verbindung mit dem im mittleren Bereich des Filtermoduls angeordneten Filtratraum 5a. Zur Verdeutlichung sind in der Zeichnung die Strömungsrichtungen des Filtrats und des Unfiltrats mit Pfeilen gekennzeichnet.

In den radial inneren Bereichen der Verteilerschichten 3 und in den radial äußeren Bereichen der Sammlerschichten 4 sind jeweils Dichtelemente 6, 7 angeordnet. Diese Dichtelemente 6, 7 verhindern ein Überströmen von Unfiltrat an den Filterschichten 1 vorbei in den Kanal 5a für das Filtrat. Die Filterschichten 1 haben keine Dichtelemente, da die Filterschichten 1 radial durchdringendes Unfiltrat reinigen und als Filtrat in den Kanal 5a abgeben.

Die Sammlerschichten 4 und die Verteilerschichten 3 können als offene Filterschichten gestaltet sein, so daß sie aus demselben Basismaterial wie die Filterschichten 1 bestehen, jedoch in diesen keinerlei Abscheidung erfolgt. Die Filterschichten 1 können aus Tiefenfiltermaterial gefertigt sein und organische und/oder anorganische, faserige und/oder körnige Stoffe aufweisen. Die Dichtelemente 6, 7 können beispielsweise dadurch erzeugt werden, daß die Sammlerschichten 4 und die Verteilerschichten 3 an diesen Stellen mit Harz getränkt und damit abgedichtet sind. Das gesamte Filtermodul besteht damit aus demselben Basismaterial und läßt sich ohne Zerlegung recyceln.

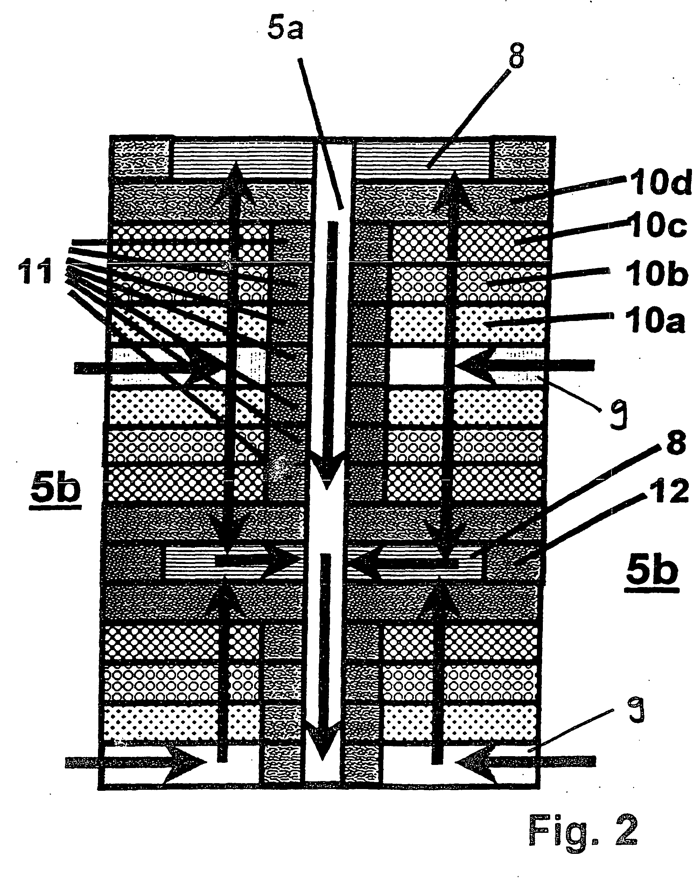

Die Fig. 2 zeigt eine weitere Ausführungsform des erfindungsgemäßen Filtermoduls mit mehreren zwischen Sammlerschichten 8 und Verteilerschichten 9 angeordneten Filterschichten 10 a - 10 c und einer Entkeimungsschicht 10 d. Diese Filterschichten 10 a - 10 c weisen einen in Strömungsrichtung gesehen ansteigenden Abscheidegrad auf. Die Entkeimungsschicht 10 d ist unmittelbar vor der Sammlerschicht 8 für das Filtrat angeordnet und weist einen besonders hohen Abscheidegrad auf. Hierdurch wird das Unfiltrat stufenweise gefiltert und damit eine besonders hohe Standzeit des Filtermoduls gewährleistet. Die Filterschichten 10 a - 10 c weisen jeweils wie die Verteilerschichten 9 zu dem das Filtrat abführenden Kanal 5a weisende Dichtelemente 11 auf. Die Sammlerschicht 8 hat ein in ihrem radial äußeren Bereich angeordnetes Dichtelement 12. Diese Dichtelemente 11, 12 sind jeweils aus Stücken der Entkeimungsschicht 10 d gefertigt. Da die Entkeimungsschicht 10 d diejenige Schicht mit dem höchsten Abscheidegrad ist, wird hindurchströmendes Unfiltrat gereinigt. Weiterhin können sich die Dichtelemente 11, 12 nach kurzer Betriebszeit des Filtermoduls zusetzen.

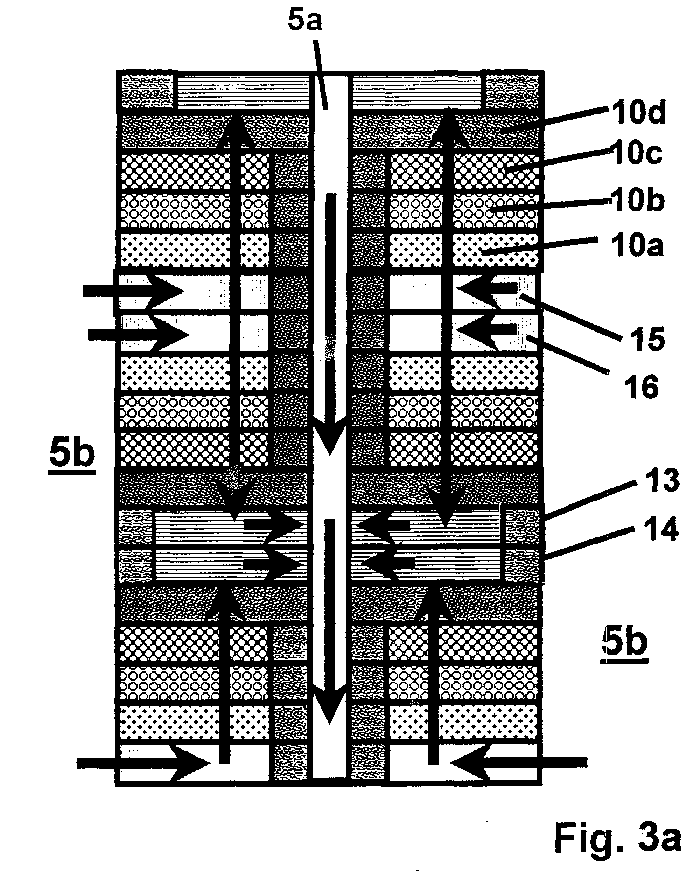

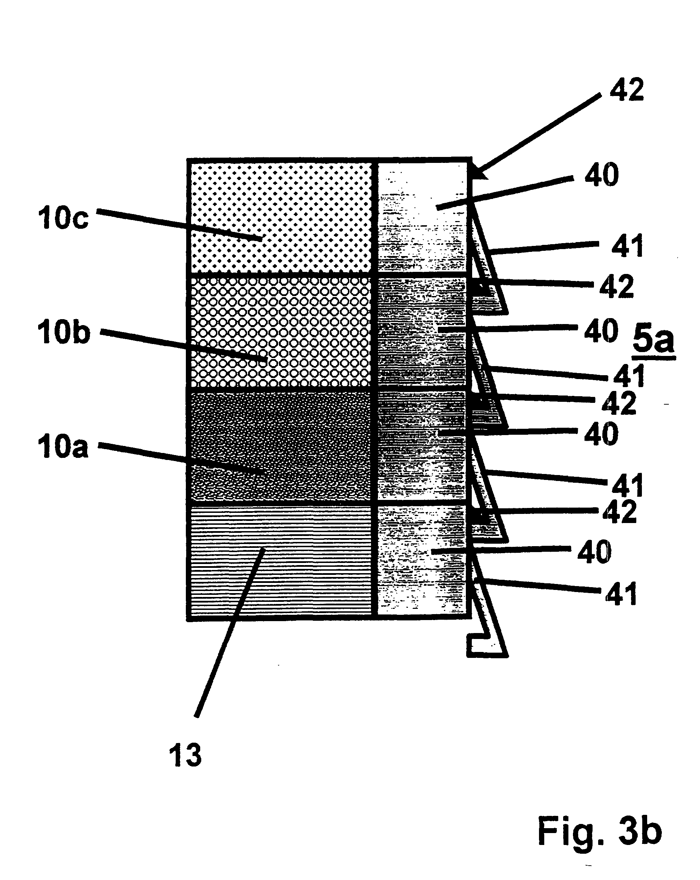

Die Fig. 3 a zeigt eine weitere Ausführungsform des erfindungsgemäßen Filtermoduls. Dieses Filtermodul unterscheidet sich von dem aus Fig. 2 im wesentlichen dadurch, daß jeweils zwei Sammlerschichten 13, 14 und Verteilerschichten 15, 16 übereinander angeordnet sind. Die Sammlerschichten 13, 14 für das Filtrat sind aus Entkeimungsschichten mit Durchbrechungen gefertigt. Hierdurch ist eine Abdichtung dieser Schichten 1, 14 in radial äußeren Bereichen nicht erforderlich.

In der Fig. 3 b ist ein Ausschnitt aus der in der Fig. 3 a gezeigten Filterschichtanordnung vergrößert dargestellt. Die Dichtelemente sind in Form von Kunststofformteilen 40 gefertigt und bilden Ringe um die Filterschichten 10 a, b, c bzw. um die Sammler-/Verteiler-Schichten 13. Die Formteile 40 besitzen im Bereich des Filtratkanals 5a Befestigungsmittel in Form von Clipsen 41, die mit Rastnasen 42 zusammenwirken. Die Clipse 41 sind bügelförmig an die Formteile 40 angeformt. Jedes Formteil 40 besitzt somit mindestens einen Clips 41 und mindestens eine benachbart dazu angeordnete Rastnase 42.

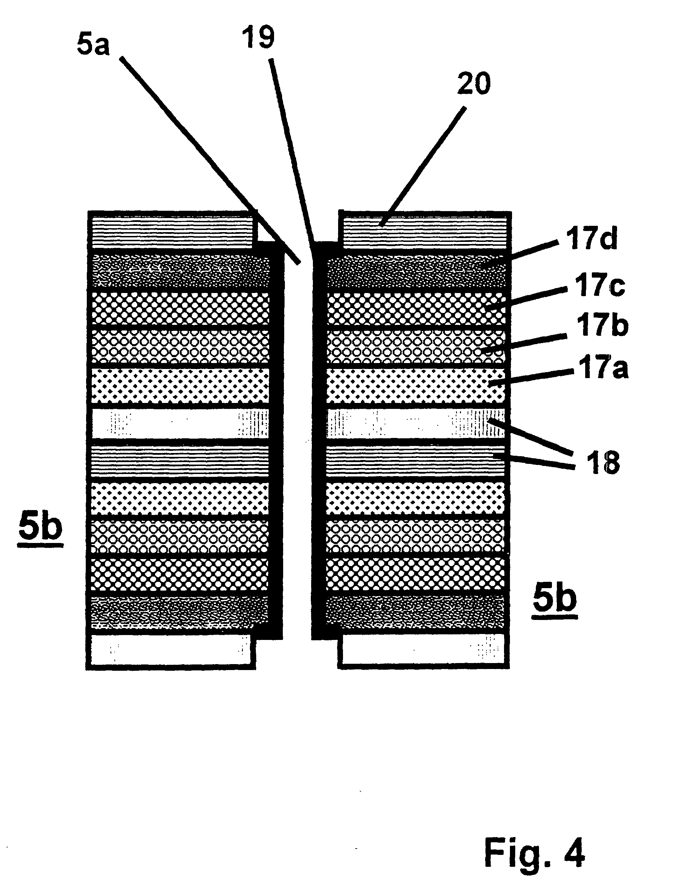

Die Fig. 4 zeigt eine weitere Ausführungsform des erfindungsgemäßen Filtermoduls, bei dem Filterschichten 17 a - 17 d und Verteilerschichten 18 für das Unfiltrat ein gemeinsames rohrförmiges, den Kanal 5a für das Filtrat bildendes Dichtelement 19 haben. Sammlerschichten 20 für das Filtrat sind aus der gelochten Filterschicht 17 d mit dem höchsten Abscheidegrad gefertigt.

Diese Ausführungsform des erfindungsgemäßen Filtermoduls hat eine hohe Eigenstabilität und läßt sich sehr einfach zu größeren Einheiten zusammenstecken.

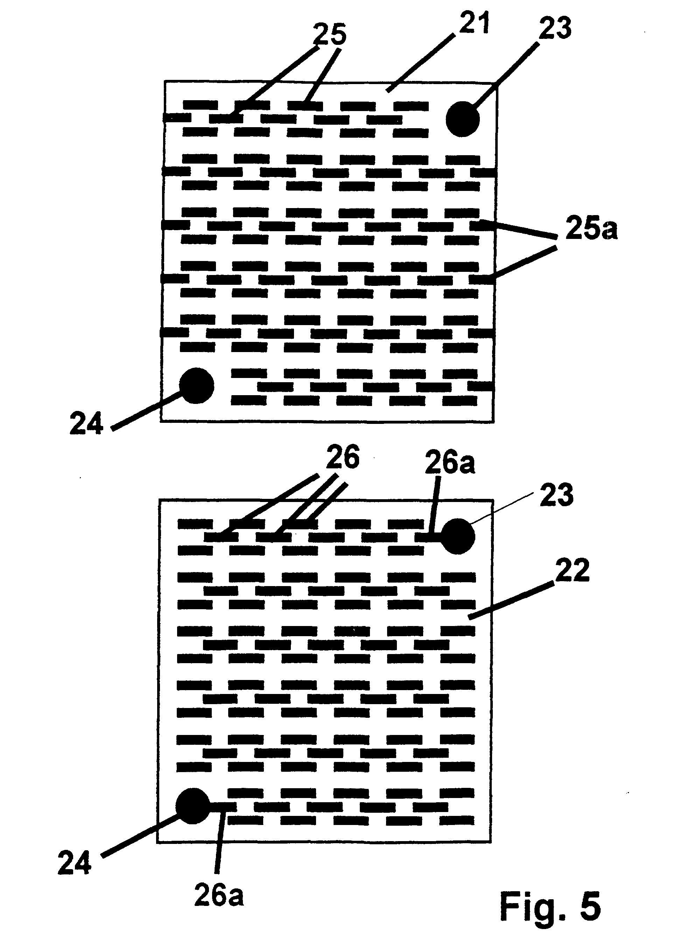

Die Fig. 5 zeigt je eine Verteilerschicht 21 und eine Sammlerschicht 22. Die Sammlerschicht 22 und die Verteilerschicht 21 sind aus dem Material einer Entkeimungsschicht mit einem besonders hohen Abscheidegrad gefertigt und haben zwei in mittleren Bereichen angeordnete Kanäle 23, 24 zum Abführen des Filtrats und jeweils eine Vielzahl von streifenförmigen Durchbrechungen 25, 25 a, 26, 26 a. Einige der Durchbrechungen 25 a der Verteilerschichten 21 sind mit der Umgebung verbunden.

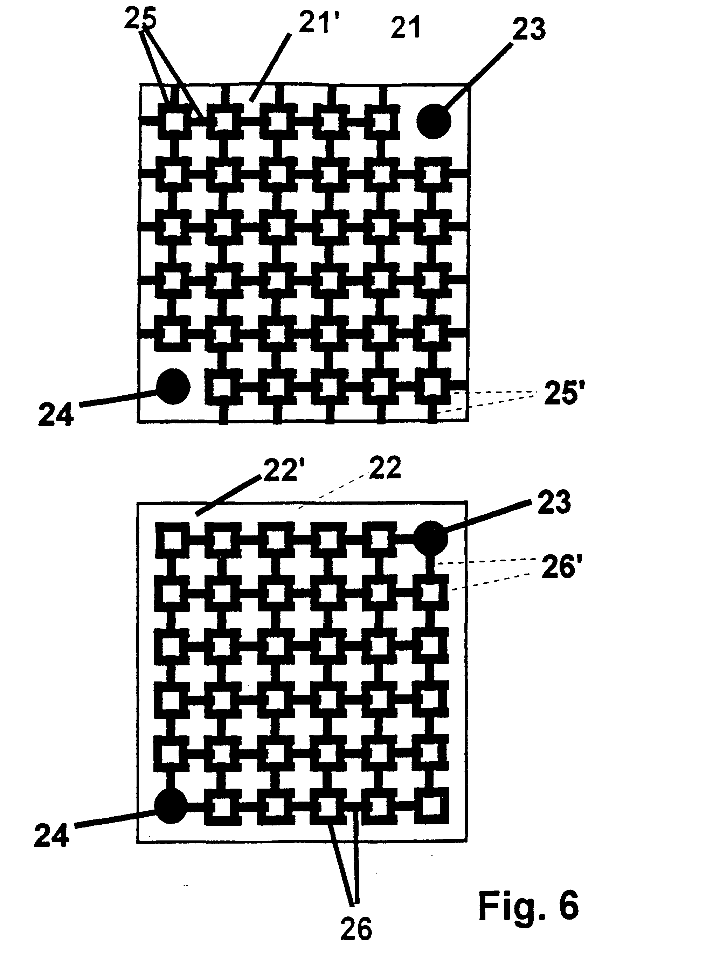

Die Fig. 6 zeigt die Anordnung von Durchbrechungen 25, 25', 26' jeweils zweier gegeneinander verdreht übereinandergelegter Sammlerschichten 22, 22' und Verteilerschichten 21, 21' aus Fig. 5. Hierdurch sind alle Durchbrechungen 25, 25', 26, 26' zweier aneinanderliegender Schichten 21, 21', 22, 22' miteinander verbunden, so daß das Filtrat oder das Unfiltrat in den Durchbrechungen 25, 25', 26, 26' einfach gesammelt oder verteilt werden kann. Diese Verteilerschichten 21, 21' und die Sammlerschichten 22, 22' lassen sich beispielsweise in den Filtermodulen nach den Figuren 3 und 4 einsetzen.

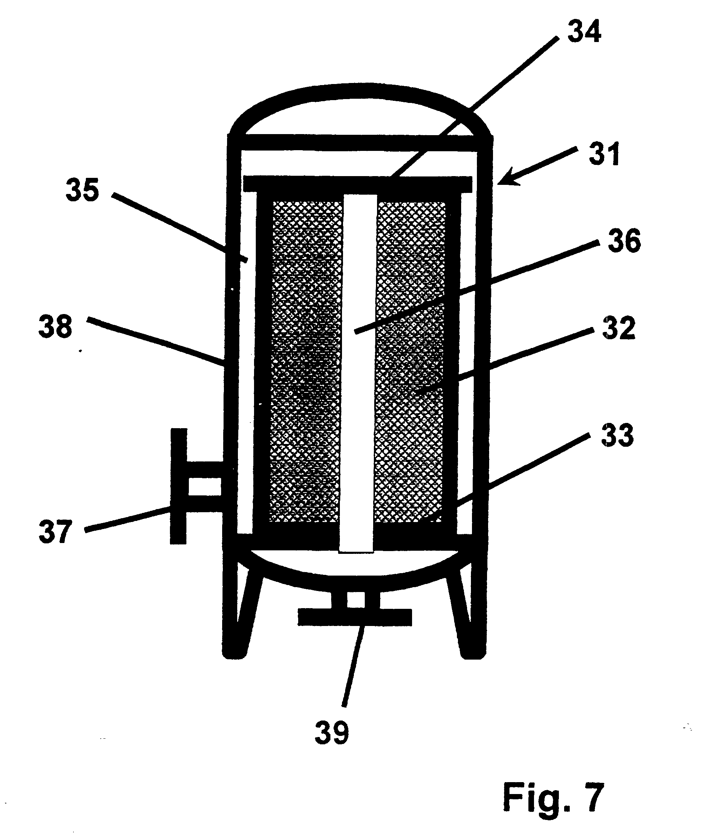

Die Fig. 7 veranschaulicht eine Filtereinrichtung 31, in die ein Filtermodul 32 eingesetzt ist. Das Filtermodul 32 steht auf einer unteren festen Endplatte 33. Um Längenänderungen des Filtermoduls 32 im Betrieb zu kompensieren, ist eine obere Endplatte 34 beweglich gelagert. Hierbei ist außen bzw. oberhalb des Filtermoduls 32 ein Unfiltratsraum 35 angeordnet. Ein Filtratraum 36 befindet sich innerhalb bzw. unterhalb des Filtermoduls 32. Das Unfiltrat gelangt durch einen Stutzen 37 in einer Seitenwand 38 des Behältermantels in die Filtereinrichtung 31. Durch einen zentrisch am Boden der Filtereinrichtung 31 angeordneten Stutzen 39 verläßt das Filtrat den Filtratraum 36.

### Bezugszeichen

- 1: Filterschicht
- 3: Verteilerschicht
- 4: Sammlerschicht
- 5a: Filtratraum
- 5b: Unfiltratraum
- 6, 7: Dichtelement
- 8: Sammlerschicht
- 9: Verteilerschicht
- 10a - 10c: Filterschicht
- 10d: Entkeimungsschicht
- 11, 12: Dichtelement
- 13, 14: Sammelschicht
- 15, 16: Verteilerschicht
- 17a - 17d: Filterschicht
- 18: Verteilerschicht
- 19: Dichtelement
- 20: Sammlerschicht
- 21, 21': Verteilerschicht
- 22, 22': Sammlerschicht
- 23, 24: Kanal
- 25, 26: Durchbrechung
- 27: Durchbrechung
- 28 - 30: Verteilerschicht
- 31: Filtereinrichtung
- 32: Filtermodul
- 33, 34: Endplatte
- 35: Unfiltratraum
- 36: Filtratraum
- 37: Stutzen
- 38: Seitenwand
- 39: Stutzen
- 40: Formteil
- 41: Clips
- 42: Rastnase

## Patentansprüche

1. Filtermodul mit Sammler-/Verteiler-Schichten für das Filtrat und das Unfiltrat, zwischen denen jeweils mindestens eine Filterschicht aus Tiefenfiltermaterial angeordnet ist,
wobei die Filterschichten (1, 10 a - d, 17 a - d) und die Sammler-/Verteiler-Schichten (3, 4, 8, 9, 13 - 16, 18, 20 - 22, 28 - 30) aus demselben Basismaterial gefertigt sind, unterschiedliche Durchlässigkeit und/oder Abscheidegrade aufweisen, spaltfrei aufeinandergestapelt sind, und wechselseitig zu einem Filtrat/Unfiltratraum (5a, 5b) mittels Dichtelementen abgedichtet sind, **dadurch gekennzeichnet, daß** die Dichtelemente aus derjenigen Filterschicht (10 d) mit dem höchsten Abscheidegrad oder aus mit Harz getränkter Filterschicht (1, 2, 10 a - c) gefertigt sind oder Formteile (40) sind, die Mittel zum gegenseitigen Verbinden aufweisen.

2. Filtermodul nach Anspruch 1, **dadurch gekennzeichnet, daß** mindestens zwei Filterschichten (10 a - d) unterschiedlicher Abscheidegrade aufeinanderliegen.

3. Filtermodul nach Anspruch 1, **dadurch gekennzeichnet, daß** mindestens zwei Filterschichten (1) mit demselben Abscheidegrad aufeinanderliegen.

4. Filtermodul nach einem der Ansprüche 1 bis 3, **dadurch gekennzeichnet, daß** die Filterschichten (1) adsorptiv wirkende Filterschichten sind.

5. Filtermodul nach einem der Ansprüche 1 bis 4, **dadurch gekennzeichnet, daß** in die Filterschichten (1) unterschiedliche adsorptiv wirkende Materialien eingearbeitet sind.

6. Filtermodul nach einem der Ansprüche 1 bis 5, **dadurch gekennzeichnet, daß** die Sammler-/Verteiler-Schichten (3, 4, 8, 9, 13 - 16, 18) offene Filterschichten sind.

7. Filtermodul nach Anspruch 6, **dadurch gekennzeichnet, daß** die Sammler-/Verteiler-Schichten (3, 4, 8, 9, 13 - 16, 18) jeweils zur Einströmung in ihren Randbereichen vorgesehen sind.

8. Filtermodul nach einem der Ansprüche 1 bis 5, **dadurch gekennzeichnet, daß** die Sammler-/Verteilerschichten (21 - 22, 28 - 30) in der vorgesehenen Strömungsrichtung weisende Durchbrechungen (25, 26, 27) aufweisen.

9. Filtermodul nach Anspruch 8, **dadurch gekennzeichnet, daß** schlitzartige Durchbrechungen (25, 26) jeweils zwei übereinanderliegender Sammler/Verteiler-Schichten (28 - 30) miteinander verbunden sind.

10. Filtermodul nach einem der Ansprüche 8 oder 9, **dadurch gekennzeichnet, daß** die Sammler-/Verteiler-Schichten (21 - 22) aus mit Durchbrechungen (25, 26) versehenen Entkeimungsschichten gestaltet sind.

11. Filtermodul nach einem der Ansprüche 1 bis 10, **dadurch gekennzeichnet, daß** die Filterschichten (10, 17) zum Filtratkanal (5a) weisende Dichtelemente (6, 7, 11, 12, 19) aufweisen.

12. Filtermodul nach einem der Ansprüche 1 bis 11, **dadurch gekennzeichnet, daß** diese Verbindungsmittel Clipse (41) und Rastnasen (42) umfassen.

13. Filtermodul nach einem der Ansprüche 1 bis 12, **dadurch gekennzeichnet, daß** mehrere aneinandergrenzende Dichtelemente (19) einteilig gestaltet sind.

## Claims

1. Filter module having collector/distributor layers for the filtrate and the unfiltered material, between which at least one filter layer composed of deep-bed filter material is arranged,
wherein the filter layers (1, 10 a - d, 17 a - d) and the collector/distributor layers (3, 4, 8, 9, 13 - 16, 20 - 22, 28 - 30) are made from the same basic material, have differing permeability and/or degrees of separation, are stacked on top of one another without a gap and are sealed with respect to the filtrate/unfiltered material space (5a, 5b) by means of sealing elements on alternate sides, **characterised in that** the sealing elements are made from that filter layer (10 d) which has the highest degree of separation or from resin-impregnated filter layer (1, 2, 10 a - c) or are moulded articles (40) that have means for mutual connection.

2. Filter module according to claim 1, **characterised in that** at least two filter layers (10 a - d) having different degrees of separation lie on top of one another.

3. Filter module according to claim 1, **characterised in that** at least two filter layers (1) having the same degree of separation lie on top of one another.

4. Filter module according to any one of claims 1 to 3, **characterised in that** the filter layers (1) are filter layers having an adsorptive action.

5. Filter module according to any one of claims 1 to 4, **characterised in that** materials having a differing adsorptive action are incorporated in the filter layers (1).

6. Filter module according to any one of claims 1 to 5, **characterised in that** the collector/distributor layers (3, 4, 8, 9, 13 - 16, 18) are open filter layers.

7. Filter module according to claim 6, **characterised in that** the collector/distributor layers (3, 4, 8, 9, 13 - 16, 18) are intended for inward flow in their edge regions in each case.

8. Filter module according to any one of claims 1 to 5, **characterised in that** the collector/distributor layers (21 - 22, 28 - 30) have openings (25, 26, 27) pointing in the intended flow direction.

9. Filter module according to claim 8, **characterised in that** the slot-like openings (25, 26) of two superposed collector/distributor layers (28 - 30) in each case are connected to one another.

10. Filter module according to either claim 8 or claim 9, **characterised in that** the collector/distributor layers (21 - 22) are formed from germ-removing layers provided with openings (25, 26).

11. Filter module according to any one of claims 1 to 10, **characterised in that** the filter layers (10, 17) have sealing elements (6, 7, 11, 12, 19) towards the filtrate channel (5a).

12. Filter module according to any one of claims 1 to 11, **characterised in that** these connection means comprise clips (41) and catch projections (42).

13. Filter module according to any one of claims 1 to 12, **characterised in that** a plurality of adjacent sealing elements (19) are formed in one piece.

## Revendications

1. Module filtrant avec couches collectrices/ distributrices pour le filtrat et: le non-filtrat, entre lesquelles est disposée au moins une couche de filtre en matériau de filtre à lit profond,
où les couches de filtre (1, 10 a-d, 17 a-d) et les couches collectrices/distributrices (3, 4, 8, 9, 13-16, 18, 20-22, 28-30) sont fixées sur le même matériau de base, présentent des perméabilités et/ou taux de séparation différents, sont empilées les unes sur les autres sans vide et sont rendues étanches mutuellement par rapport à un espace filtrat/non-filtrat (Sa, 5b) à l'aide d'éléments d'étanchéité, **caractérisé en ce que** les éléments d'étanchéité sont fixés sur chaque couche de filtre (10d) avec le taux de séparation le plus élevé ou sur la couche de filtre (1, 2, 10 a-c) imprégnée de résine ou sont des articles moulés (40) qui présentent des moyens de liaison réciproque.

2. Module filtrant selon la revendication 1, **caractérisé en ce qu'**au moins deux couches de filtre (10 a-d) de taux de séparation différents se trouvent l'une sur l'autre.

3. Module filtrant selon la revendication 1, **caractérisé en ce qu'**au moins deux couches de filtre (1) avec le même taux de séparation se trouvent l'une sur l'autre.

4. Module filtrant selon l'une quelconque des revendications 1 à 3, **caractérisé en ce que** les couches de filtre (1) sont des couches de filtre agissant par adsorption.

5. Module filtrant selon l'une quelconque des revendications 1 à 4, **caractérisé en ce que** dans les couches de filtre (1), sont incorporés différents matériaux agissant par adsorption.

6. Module filtrant selon l'une quelconque des revendications 1 à 5, **caractérisé en ce que** les couches collectrices/distributrices (3, 4, 8, 9, 13-16, 18) sont des couches de filtre ouvertes.

7. Module filtrant selon la revendication 6, **caractérisé en ce que** les couches collectrices/ distributrices (3, 4, 8, 9, 13-16, 18) sont prévues pour l'admission dans leur zone limite.

8. Module filtrant selon l'une quelconque des revendications 1 à 5, **caractérisé en ce que** les couches collectrices/distributrices (21-22, 28-30) présentent des perforations (25, 26, 27) dirigées dans la direction prévue d'écoulement.

9. Module filtrant selon la revendication 8, **caractérisé en ce que** des perforations de type fente (25, 26) chaque fois de deux couches collectrices/distributrices superposées (28-30) sont reliées l'une à l'autre.

10. Module filtrant selon la revendication 8 ou 9, **caractérisé en ce que** les couches collectrices/ distributrices (21-22) sont formées de couches de désinfection munies de perforations (25, 26).

11. Module filtrant selon l'une quelconque des revendications 1 à 10, **caractérisé en ce que** les couches de filtre (10, 17) présentent des éléments d'étanchéité (6, 7, 11, 12, 19) pour le canal de filtrat (5a).

12. Module filtrant selon l'une quelconque des revendications 1 à 11, **caractérisé en ce que** ces éléments de liaison comprennent des clips (41) et des tenons d'arrêt (42).

13. Module filtrant selon l'une quelconque des revendications 1 à 12, **caractérisé en ce que** plusieurs éléments d'étanchéité (19) contigus sont formés d'une pièce.
